# EUROPÄISCHE PATENTSCHRIFT

(11) **EP 3 003 611 B1**
(45) Veröffentlichungstag und Bekanntmachung des Hinweises auf die Patenterteilung: **29.04.2020**
(21) Anmeldenummer: 14718581.3
(22) Anmeldetag: 17.04.2014
(51) Int. Cl.: B23B 31/02

(54) **WERKZEUGSPANNSYSTEM**
TOOL CLAMPING SYSTEM
SYSTEME DE SERRAGE D'OUTIL

(30) Priorität: 06.06.2013 DE 102013105831
(43) Veröffentlichungstag der Anmeldung: 13.04.2016
(73) Patentinhaber: Bilz Werkzeugfabrik GmbH & Co. KG, 73760 Ostfildern (DE)
(72) Erfinder: FRONIUS, Jürgen, 74399 Walheim (DE); BADER, Rudolf, 73734 Esslingen (DE); ZIERER, Ulrich, 72762 Reutlingen (DE)
(74) Vertreter: Witte, Weller & Partner Patentanwälte mbB
(86) Internationale Anmeldenummer: PCT/EP2014/057874
(87) Internationale Veröffentlichungsnummer: WO 2014/195054

(56) Entgegenhaltungen:
- DE-A1-102008 009 340
- DE-A1-102011 051 772
- US-A- 4 890 306
- US-A- 5 876 043
- US-A1- 2004 194 600
- US-A1- 2009 234 490
- US-A1- 2010 262 308

## Beschreibung

Die Erfindung betrifft ein Werkzeugspannsystem mit einem maschinell antreibbaren Werkzeughalter zum Spannen eines Werkzeugs,

Derartige Werkzeugspannsysteme sind seit Jahrzehnten bekannt und werden in vielfältiger Weise bei der spanenden Bearbeitung von Werkstücken eingesetzt.

Seit einigen Jahren wird bei manchen Bearbeitungszentren gefordert, dass neben den üblichen spanenden Werkzeugen zum Teil auch messtechnische Anwendungen bzw. Überwachungen des Werkzeugs realisiert werden. Hierbei handelt es sich im Allgemeinen um Applikationen, bei denen ein Messsystem, meist beruhend auf elektromechanischen Prinzipien, auf eine Spindelschnittstelle montiert wird. So soll einerseits die Verbindung und Führung durch die Maschinenkinematik sichergestellt werden und andererseits die Messwerterfassung und -übertragung an die Steuerung ermöglicht werden. Hierbei muss die Energieversorgung des Messsystems meist durch Batterien oder Akkumulatoren realisiert werden. Die Datenübertragung zu einer festen Auswertungsstation findet standardgemäß über Infrarotsender und -Empfänger statt, zunehmend auch über Funk, wie etwa WLAN oder Bluetooth.

Jedoch ist die Versorgung mittels Batterie oder Akkumulator meist eine einschränkende Größe, da die Sicherstellung der Energieversorgung so zu zusätzlichem Wartungs- und Betreuungsaufwand führt. Die Ladestation ist normalerweise außerhalb der Werkzeugmaschine angesiedelt, oder es muss die betreffende Applikation zum Batteriewechsel aus der Werkzeugmaschine entnommen werden. Darüber hinaus stellt die Energieversorgung bei Sensorsystemen oder ggf. auch aktiv arbeitenden, aktorischen Systemen generell eine Einschränkung dar. Daran und an der extrem rauen Umgebung im Arbeitsraum von Werkzeugmaschinen scheitert grundsätzlich die Ausstattung von an sich bekannten Werkzeugen mit zusätzlicher Intelligenz.

Vor diesem Hintergrund besteht ein Bedarf an Werkzeugüberwachungssystemen, die bei Werkzeugmaschinen ohne externe Energieversorgung arbeiten können.

Aus der US 5 876 043 A ist ein rotierend antreibbarer Werkzeughalter mit einer Überwachungsschaltung zur Detektion von Fehlern bekannt, bei dem die notwendige Energie zur drahtlosen Übertragung eines Fehlersignals aus einer Generatorschaltung unter Ausnutzung der Rotationsenergie gewonnen wird.

Eine ähnliche Anordnung ist aus der US 2009/0234490 A1 bekannt.

Vor diesem Hintergrund liegt der Erfindung die Aufgabe zugrunde, ein Werkzeugspannsystem mit einem maschinell antreibbaren Werkzeughalter zur Spannung eines Werkzeugs zu schaffen, das eine Energieversorgung zur Erzeugung von elektrischer Energie ohne eine externe Spannungsversorgung in Form einer Batterie oder eines Akkumulators erlaubt. Das System soll insbesondere für ein Hohnwerkzeug anwendbar sein.

Diese Aufgabe wird erfindungsgemäß bei einem Werkzeugspannsystem mit einem maschinell antreibbaren Werkzeughalter zum Spannen eines Werkzeugs durch eine Einrichtung zur Erzeugung von elektrischer Energie aus der Trägheitsenergie des Werkzeugspannsystems gelöst, wobei der Werkzeughalter oszillierend antreibbar, wobei die Einrichtung zur Erzeugung von elektrischer Energie aus der Trägheitsenergie des oszillierenden Werkzeugspannsystems ausgebildet ist, und wobei eine auf einem Schaft des Werkzeughalters axial beweglich gelagerte Trägheitsmasse vorgesehen ist.

Die Aufgabe der Erfindung wird auf diese Weise vollkommen gelöst.

Da das Werkzeugspannsystem im Betrieb immer mit einer gewissen Trägheit bewegt wird, wird erfindungsgemäß diese Trägheitsenergie ausgenutzt, um elektrische Energie zu erzeugen. Diese elektrische Energie kann im Bereich des Werkzeugs oder der Werkzeugeinspannung genutzt werden, um eine Rückkopplung über das Werkzeug oder das Werkzeugspannsystem im Betrieb zu liefern, so dass der Bearbeitungsvorgang besser gesteuert und/oder überwacht werden kann.

Es kann sich hierbei insbesondere um eine Längsoszillation, d.h. eine in Axialrichtung hin- und hergehende Linearbewegung handeln. Grundsätzlich ist jedoch auch eine Drehoszillation denkbar, d.h. eine um eine Drehachse hin- und her oszillierende Drehbewegung. Ggf. ist der oszillierenden Bewegung zusätzlich noch eine Rotationsbewegung überlagert, deren Trägheit gleichfalls zur Energieerzeugung genutzt werden kann.

Eine in Längsrichtung oszillierende Bewegung lässt sich erfindungsgemäß sehr einfach zur Energieerzeugung ausnutzen, da die Energie der oszillierenden Bewegung auf die Trägheitsmasse übertragen wird.

Gemäß einer weiteren Ausgestaltung der Erfindung ist der Werkzeughalter zur Aufnahme eines Honwerkzeuges ausgebildet.

Honwerkzeuge sind in der Regel einerseits rotierend angetrieben, andererseits bewegt sich das Honwerkzeug in einer hin- und her oszillierenden Längsbewegung, etwa wenn eine Bohrung, beispielsweise eine Zylinderbohrung in einem Dieselmotor oder einem Ottomotor, bearbeitet wird.

Da sich das Honwerkzeug beim Honen selbst in Folge von Werkstückabtrag verändert, ist beim Honvorgang eine Nachführung des Honwerkzeuges erforderlich. Hierzu wäre eine Kraftmessung oder eine Wegmessung von Vorteil, um eine optimierte Nachführung des Werkzeugs zu erlauben. Noch weiter verbessert werden kann der Honvorgang, wenn dieser ständig durch eine Kraft- oder Wegmessung überwacht wird. Erfindungsgemäß kann die erzeugte Energie dazu verwendet werden, um die Kraft oder die Position der Honleiste vorzugsweise drahtlos an eine Steuerung zu übertragen, mittels derer der Honvorgang überwacht und gesteuert werden kann.

Gemäß einer Weiterbildung der Erfindung ist die Trägheitsmasse zwischen zwei vorzugsweise federnden Anschlägen axial beweglich gelagert.

Auf diese Weise ist eine definierte Auslenkung in Axialrichtung vorgegeben.

Ferner kann das Werkzeugspannsystem am Schaft und der Trägheitsmasse zumindest eine mit einem Magnet zusammenwirkende Wicklung zur Erzeugung einer Induktionsspannung aus der in Längsrichtung hin- und her oszillierenden Bewegung und/oder der rotierenden Bewegung aufweisen.

Gemäß einer weiteren Ausführung der Erfindung wirkt der mindestens ein Magnet, vorzugsweise in Form eines Permanentmagneten, einerseits mit mindestens einer Wicklung oder einem Magnetarray andererseits zusammen, wobei vorzugsweise der mindestens eine Magnet an der Trägheitsmasse vorgesehen ist und die mindestens eine Wicklung oder das Magnetarray am Schaft.

Auf diese Weise ist eine einfache Nutzung der erzeugten Spannung durch Abgriff an der Wicklung bzw. dem Magnetarray am Schaft ermöglicht.

Gemäß einer weiteren Ausführung der Erfindung ist eine in Axialrichtung zwischen den zwei Anschlägen vorgegebene maximale Amplitude in Axialrichtung größer ist als die axiale Länge des mindestens einen Magneten.

Dadurch wird eine effektive Spannungserzeugung gewährleistet.

Gemäß einer weiteren Ausgestaltung der Erfindung weist die mindestens eine Wicklung einen Magnetkern auf, dessen axiale Länge von der axialen Länge des mindestens einen Magneten abweicht.

Auf diese Weise wird ein großes magnetisches Rastmoment vermieden und eine Axialbewegung der Trägheitsmasse erleichtert.

Durch diese Maßnahmen kann eine sehr effektive Energiegewinnung gewährleistet werden.

Die Ausgangsspannung des Spannungsgenerators, die vorzugsweise gleichgerichtet und spannungsstabilisiert wird, kann etwa einem Sensor und/oder einem Sender zur drahtlosen Übertragung eines Nutzsignals an eine stationäre Auswerteschaltung zugeführt sein.

Der Sensor kann dazu vorgesehen sein, einen Betriebsparameter des Werkzeugspannsystems zu überwachen und einer Auswerteschaltung zuzuführen.

Bei dem Betriebsparameter kann es sich etwa um die Temperatur, die Beschleunigung des Werkzeugspannsystems, die auf das Werkzeug ausgeübte Kraft, um die Lage des Werkzeugs oder um einen anderen Betriebsparameter handeln.

In weiter vorteilhafter Ausgestaltung der Erfindung ist der Sensor am Werkzeug vorgesehen und mit dem Werkzeughalter über eine elektrische Schnittstelle zur Übertragung einer Versorgungsspannung und eines Ausgangssignals gekoppelt.

Weiter bevorzugt ist eine Sendeeinrichtung zur drahtlosen Übertragung eines Signals an eine stationäre Auswerteschaltung vorgesehen, die vorzugsweise am Werkzeughalter angeordnet ist.

Bei der drahtlosen Übertragung können beliebige bekannte Verfahren verwendet werden, wie etwa Funkübertragung, RFID, Bluetooth, WLAN usw.

Bei dem Werkzeug kann es sich um beliebige Werkzeuge handeln, wie Bohrwerkzeuge, Fräswerkzeuge, Sägewerkzeuge oder auch anders geartete Werkzeuge oder um eine Verlängerung.

Es versteht sich, dass die vorstehend genannten und die nachstehend noch zu erläuternden Merkmale der Erfindung nicht nur in der jeweils angegebenen Kombination, sondern auch in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine teilweise freigeschnittene perspektivische Ansicht eines Werkzeugspannsystems, das jedoch nicht von der Erfindung umfasst ist;
- Fig. 2: einen vereinfachten Detail-Ausschnitt aus einem nicht von der Erfindung umfassten Spannungsgenerator in einer Ausführung als Scheibenläufer;
- Fig. 3: schematisch einen Drehzahlverlauf des nicht von der Erfindung umfassten Werkzeugspannsystems in Abhängigkeit von der Zeit, mit gestrichelt eingezeichnetem verzögerten Verlauf des Läufers;
- Fig. 4: eine schematische Darstellung der vom Spannungsgenerator erzeugten Wechselspannung nach Gleichrichtung durch einen Brückengleichrichter;
- Fig. 5: eine mögliche Schaltung zur Gleichrichtung und Spannungsstabilisierung der vom Spannungsgenerator erzeugten Wechselspannung;
- Fig. 6: eine schematische Darstellung eines Sensors, der von der erzeugten gleichgerichteten und spannungsstabilisierten Nutzspannung U_{g} versorgt wird, um mit dessen Ausgangssignal einen Operationsverstärker zu betreiben, der wiederum einen Sender zur drahtlosen Übertragung des Nutzsignals an eine stationäre Auswerteschaltung betreibt;
- Fig. 7: eine vereinfachte schematische Darstellung einer elektrischen Schnittstelle am Ende des Werkzeugschaftes;
- Fig. 8: eine perspektivische Darstellung eines herkömmlichen Honwerkzeugs mit Antriebsschaft;
- Fig. 9: eine perspektivische Darstellung eines erfindungsgemäßen Werkzeugspannsystems mit einem Honwerkzeug;
- Fig. 10: eine teilweise geschnittene Längsansicht des Werkzeugspannsystems gemäß Fig. 9, aus dem der Aufbau der Trägheitsmasse mit Magnetarray näher hervorgeht;
- Fig. 11: eine schematische Darstellung des Magnetarrays gemäß Fig. 10 und
- Fig. 12: eine vergrößerte Teilansicht des Magnetarrays gemäß Fig. 10 mit Permanentmagneten zur Lagerung.

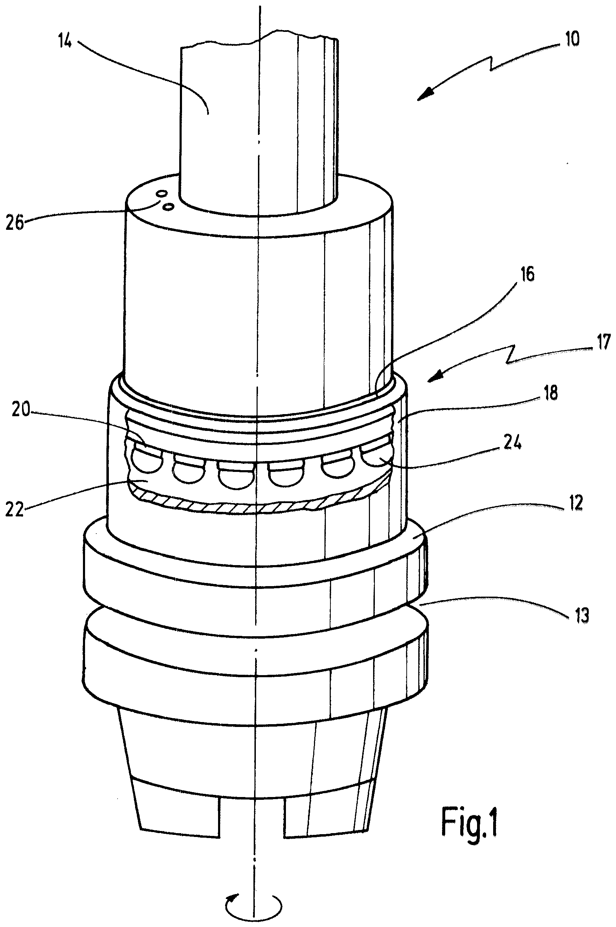

In Fig. 1 ist eine vereinfachte Ausführung eines nicht von der Erfindung umfassten Werkzeugspannsystems perspektivisch dargestellt und insgesamt mit der Ziffer 10 bezeichnet.

Das Werkzeugspannsystem 10 weist einen Werkzeughalter 12 in Form eines HSK auf, der von einer Werkzeugspindel etwa einer Dreh- oder Fräsmaschine rotierend antreibbar ist. Der Werkzeughalter 12 kann beispielsweise als Schrumpfspannfutter oder auch als mechanisch spannbares Futter ausgebildet sein.

Oberhalb einer Wechsleraufnahme 13 auf der dem Werkzeug 14 zugewandten Seite ist ein insgesamt mit 17 bezeichneter Spannungsgenerator aufgenommen. Im dargestellten Fall weist der Spannungsgenerator 17 ein am Werkzeughalter 12 aufgenommenes Innenteil oder Statorteil 22 auf, an dem Induktionswicklungen 24 vorgesehen sind. Das Statorteil 22 wirkt mit einem darauf mittels eines Wälzlagers 16 gelagerten Außenteil in Form eines Läufers 18 zusammen, an dem Permanentmagnete 20 vorgesehen sind.

Der Läufer 18 mit den Permanentmagneten 20 ist also drehbar auf dem Statorteil 22 gelagert.

Wird das Werkzeugspannsystem 10 durch eine Werkzeugspindel beschleunigt, so ergibt sich infolge der Trägheit des Läufers 18 eine Relativbewegung zwischen dem Läufer 18 und dem Statorteil 22. Durch die Bewegung der Permanentmagnete 20 entlang der Induktionswicklungen 24 wird in den Induktionswicklungen 24 eine Spannung aufgrund der elektromagnetischen Induktion induziert.

Die induzierte Wechselspannung kann gleichgerichtet und mittels eines Kondensators gespeichert und mittels eines Stabilisierungselementes, wie etwa einer Zener-Diode, stabilisiert werden.

Mit dieser Spannung kann etwa ein Sensor versorgt werden, der im Werkzeug 14 aufgenommen ist, wozu am äußeren Ende des Werkzeughalters 12 eine geeignete elektrische Schnittstelle 26 angeordnet ist, um die elektrischen Kontaktierungen mit dem Sensor zu dessen Spannungsversorgung und zur Übertragung eines Ausgangssignals zu gewährleisten.

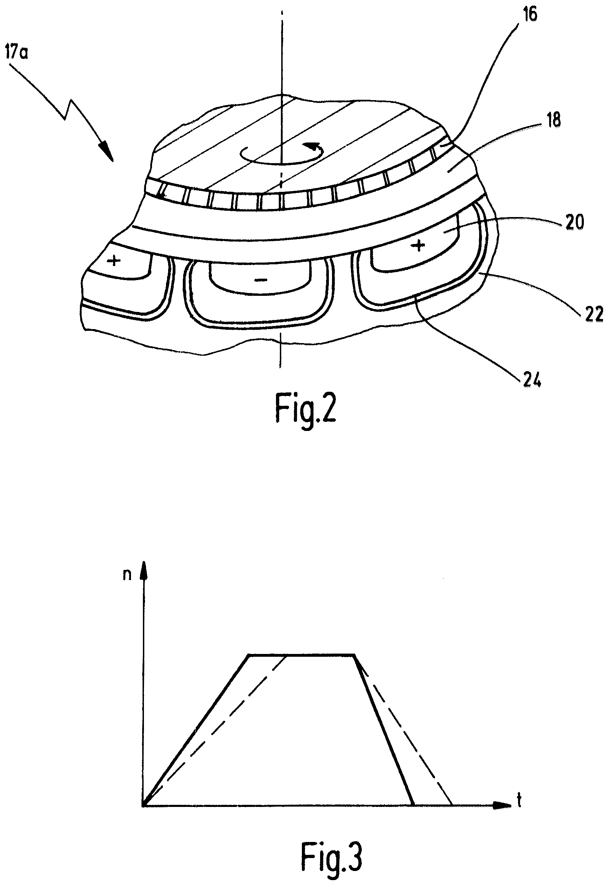

In Fig. 2 ist ein Ausschnitt eines insgesamt mit 17a bezeichneten Spannungsgenerators dargestellt, der als Scheibenläufer ausgebildet ist. Hierbei sind die betreffenden Permanentmagnete 20 auf einer Ebene des scheibenförmigen Läufers 18 planar angeordnet und wirken mit den Induktionswicklungen 24 zusammen, die in unmittelbarer Nachbarschaft zu den Permanentmagneten 20 gleichfalls in einer Ebene des Statorteils 22 planar angeordnet sind.

Die Permanentmagnete 20 sind abwechselnd mit umgekehrter Polarität angeordnet. Bei einer Relativdrehung des Läufers 18 zum Statorteil 22 ergibt sich in den Induktionswicklungen 24 des Statorteils 22 eine annähernd sinusförmige Induktionsspannung. Die Induktionswicklungen 24 können etwa monopolar oder multipolar (insbesondere tripolar) verschaltet sein. Vorzugsweise wird eine monopolare Verschaltung verwendet, was einen verringerten Aufbereitungsaufwand bei der nachfolgenden Stabilisierung der Spannung bewirkt.

In Fig. 3 (nicht von der Erfindung umfasst) ist beispielhaft eine Drehzahlrampe über der Zeit aufgetragen, die das Anfahren des Werkzeugspannsystems 10 auf eine bestimmte Betriebsdrehzahl, gefolgt von einer kurzzeitigen Konstanthaltung der Drehzahl und ein nachfolgendes Abbremsen der Drehzahl auf 0 zeigt. Gestrichelt versetzt hierzu ist die Drehzahl gezeigt, die sich am Läufer 18 durch die Verzögerung einstellt.

Naturgemäß ist der Läufer 18 gegenüber dem Werkzeughalter 12 verzögert, was sich zum einen durch die Trägheit des Läufers 18 ergibt, zum anderen aber auch durch die induzierte Spannung, die bei Belastung zu einer elektromotorischen Kraft führt, die der Ursache bekanntlich entgegengerichtet ist.

Bei einer monophasischen Verschaltung der Induktionswicklungen 24 ergibt sich eine annähernd sinusförmige Induktionsspannung, die mit Angleichung der Drehzahlen zwischen dem Läufer 18 und dem Werkzeughalter 12 natürlich im Laufe der Zeit immer geringer wird.

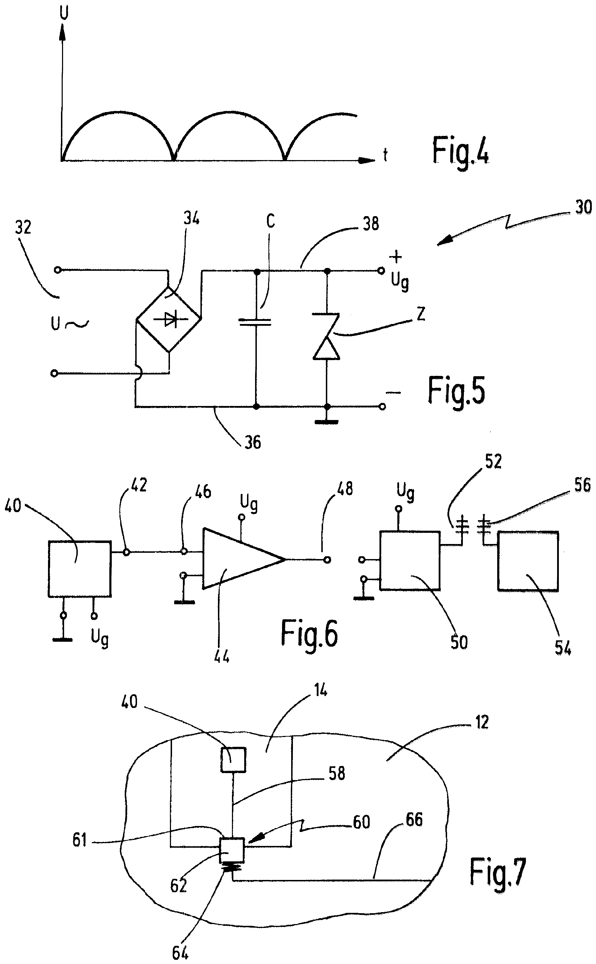

Fig. 4 (nicht von der Erfindung umfasst) zeigt die induzierte Spannung nach Gleichrichtung durch einen Brückengleichrichter noch in der Anfangsphase (d.h. ohne deutliche Verminderung der Spannung).

In Fig. 5 ist eine beispielhafte Schaltung 30 dargestellt, die zur Speicherung und Spannungsstabilisierung verwendet werden kann. Die Ausgangsspannung 32 des Spannungsgenerators 17 bzw. 17a wird dem Eingang eines Brückengleichrichters 34 zugeführt. Zwischen den beiden Ausgängen 36, 38 des Brückengleichrichters 34 liegen ein Kondensator C und parallel dazu eine Zener-Diode Z, wobei die Zener-Diode zusätzlich noch mit einem Widerstand in Reihe liegen kann (nicht dargestellt).

Der Kondensator C ist vorzugsweise als Gold-Cap-Kondensator ausgeführt, was eine besonders hohe Kapazität bei besonders geringen Verlusten gewährleistet und somit eine Langzeitspeicherung ermöglicht. Abhängig von den Ausgangsspannungsspitzen der Wicklungen kann es notwendig werden diese Spannung unter die Durchschlagsspannung des Speicherkondensators anzupassen. Die Zener-Diode begrenzt die Ausgangsspannung U_{g} auf einen durch die Zener-Diode vorgegebenen Wert. Die Ausgangsspannung U_{g} steht als Nutzspannung zur Verfügung, mit Hilfe derer beliebige Elektronikkomponenten versorgt werden können, wobei es sich vorzugsweise etwa um einen Sensor, eine Schaltung zur Signalverarbeitung oder etwa um einen Sender handeln kann.

Es versteht sich, dass die hier dargestellten Komponenten lediglich rein beispielhafter Natur sind und dass anstelle der hier dargestellten analogen Schaltungskomponenten selbstverständlich auch digitale Schaltungskomponenten denkbar sind, sofern die bereitgestellte Energie zur Spannungsversorgung ausreicht.

In Fig. 6 ist beispielhaft ein Sensor 40 dargestellt, der von der erzeugten Versorgungsspannung U_{g} gespeist wird und der an seinem Ausgang 42 ein Ausgangssignal bereitstellt.

Bei dem Sensor kann es sich beispielsweise um einen Temperatursensor, um einen Beschleunigungssensor oder um einen Kraftsensor (z.B. DMS-Messbrücke) handeln. Der Sensor 40 kann zur Überwachung beliebiger Betriebsparameter des Werkzeugspannsystems genutzt werden, also etwa zur Temperaturüberwachung, zur Kraftüberwachung, zur Überwachung der Beschleunigung.

Gemäß Fig. 6 ist das Ausgangssignal des Sensors 40 dem Eingang 46 eines nachgeordneten Operationsverstärkers 44, der gleichfalls von der Versorgungsspannung U_{g} versorgt wird, zugeführt. Das verstärkte Signal steht am Ausgang 48 des Operationsverstärkers 44 zur Verfügung und kann dann, ggf. nach weiterer Verarbeitung, einem Sender 50 zugeführt werden, der das Signal über eine Antenne 52 drahtlos an eine stationäre Auswerteschaltung 54 überträgt, die wiederum eine geeignete Antenne 56 aufweist.

Es versteht sich, dass zur Signalaufbereitung beliebige bekannte Verfahren verwendet werden können. Derartige Verfahren sind bekannt und können im Rahmen der vorliegenden Erfindung selbstverständlich genutzt werden.

Fig. 7 zeigt beispielhaft die Anordnung einer elektrischen Schnittstelle 60 im Bereich zwischen dem Schaftende des Werkzeugs 14 und einer Aufnahmebohrung des Werkzeughalters, der hier etwa als Schrumpfhalter ausgebildet ist.

Am Ende des Werkzeugschaftes des Werkzeugs 14 ist an der Stirnseite eine Kontaktfläche 61 vorgesehen, die etwa mittels geeigneter Keramikschichten gegenüber dem übrigen Teil des Werkzeugs 14 elektrisch isoliert ist und die über eine Leitung 58 etwa mit einem zugeordneten Sensor 40 im Werkzeug 14 gekoppelt ist. Der Kontaktfläche 61 ist ein federnd gelagerter Kontaktstift 62 am Werkzeughalter 12 zugeordnet, der über eine Feder 64 gegen das Werkzeug 14 vorgespannt ist. Auch dieser Kontaktstift 62 ist gegenüber dem übrigen Material des Werkzeughalters 12 in geeigneter Weise elektrisch isoliert und steht etwa über eine Leitung 66 mit einer zugeordneten Auswerte- und Sendeeinheit innerhalb des Werkzeughalters 12 in Verbindung.

Hier ist beispielhaft lediglich eine Anordnung zur Übertragung für lediglich einen Pol gezeigt. Es versteht sich, dass natürlich weitere Kontakte für die anderen Pole (etwa zur Spannungsversorgung des Sensors 40) vorgesehen sein können, ggf. in konzentrischer Anordnung. Eine konzentrische Anordnung hat den Vorteil, dass eine Spannungsübertragung unabhängig von der Einbaulage des Werkzeugs 14 an der Werkzeugaufnahme 12 ermöglicht ist.

Je nach der betreffenden Anwendung, für die der vorliegende Spannungsgenerator verwendet werden soll, wird vorteilhaft das Trägheitsmoment des Läufers, die Wicklungen und der betreffende Verbraucher sowie die zugehörige Schaltung zur Speicherung und Spannungsstabilisierung in geeigneter Weise aufeinander abgestimmt, um für den betreffenden Anwendungsfall eine optimale Spannungsausbeute zu erzielen, die über lange Zeit ausreicht, um die gewünschte(n) Überwachungsschaltung(en) in geeigneter Weise ausreichend mit Energie zu versorgen.

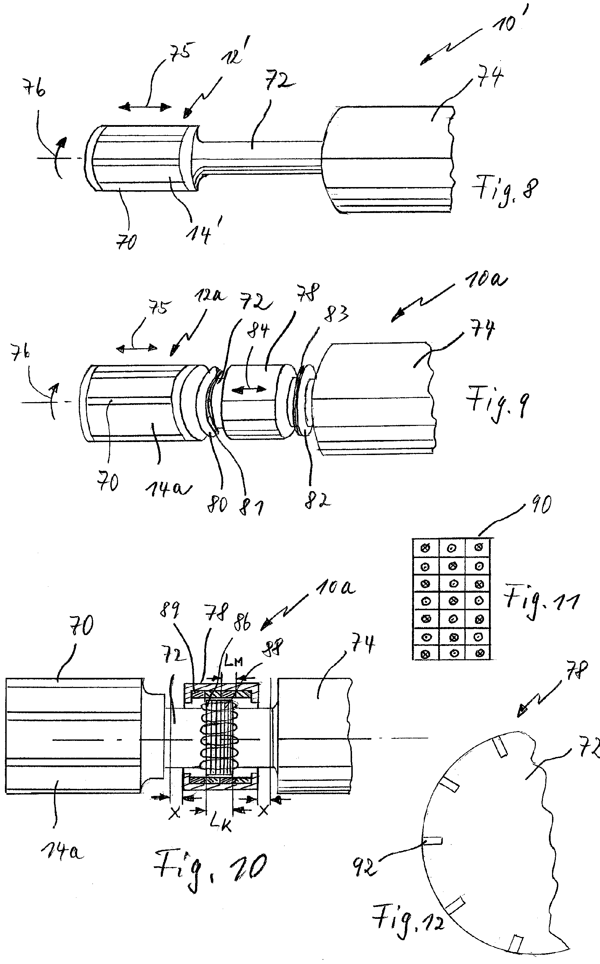

Anhand der nachfolgenden Figuren 8 bis 12 wird nunmehr eine erfindungsgemäße Ausführung der Erfindung erläutert, bei der die Oszillationsenergie bei einem Honwerkzeug zur Energieerzeugung genutzt wird.

Fig. 8 zeigt ein herkömmliches Werkzeugspannsystem 10' für ein Honwerkzeug 14'. Das Honwerkzeug 14' ist an einem Schaft 72 aufgenommen, der von einer Werkzeugspindel 74 angetrieben wird. Das Honwerkzeug 14' weist eine Mehrzahl von Honleisten 70 auf, die an der Außenoberfläche des Werkzeughalters 12' aufgenommen sind. Der Schaft 72 wird rotierend angetrieben, wie durch den Pfeil 76 angedeutet ist. Zusätzlich wird der Schaft 72 in Axialrichtung längsoszillierend angetrieben, wie durch den Pfeil 75 angedeutet ist.

Durch eine keilförmige Lagerung der Honleisten 70 auf dem Werkzeughalter 12' ergibt sich in einer ersten Richtung des Honwerkzeugs 14' nur eine leicht schleifende Bewegung ohne wesentlichen Werkstückabtrag, während sich in der umgekehrten Richtung die Honleisten 70 auf Grund der Keilwirkung an die Innenoberfläche des zu honenden Werkstücks (etwa eine Zylinderbohrung einer Brennkraftmaschine) unter Druck anlegen und einen Werkstückabtrag bewirken. Die Honleisten nehmen im Verlaufe des Honvorgangs teilweise abgetragenes Material vom Werkstück auf, so dass eine axiale Verstellung des Werkzeughalters 12' am Schaft 72 notwendig ist, um eine gleichmäßige Bearbeitung sicher zu stellen (nicht dargestellt). Bei herkömmlichen Honmaschinen erfolgt diese Nachstellung empirisch an Hand der Anzahl der zurückgelegten Hübe des Honwerkzeugs 14'.

Fig. 9 zeigt nun ein Werkzeugspannsystem 10a für eine Honmaschine, das erfindungsgemäß aufgebaut ist und eine Einrichtung 78, 88, 90 zur Spannungserzeugung aus der Trägheitsenergie eines oszillierenden Honwerkzeugs 14a aufweist. Mit dieser Energie kann ein Sensor betrieben werden, der entweder die Lage des Honwerkzeugs 14a oder die auf das Honwerkzeug ausgeübte Kraft erfasst und drahtlos z.B. über WLAN an eine Steuerung der Honmaschine überträgt.

Auf dem Schaft 72 des Werkzeugspannsystems 10a, der von der Spindel 10a (oder einer geeigneten Schnittstelle) angetrieben wird, ist eine Trägheitsmasse 78 mit einem Magnetarray 90 in Axialrichtung beweglich gelagert, wie durch den Pfeil 84 angedeutet. Die Trägheitsmasse ist zwischen zwei Anschlägen 80, 82 hin- und herbeweglich, wobei durch dazwischen befindliche Federn 81, 83 die Bewegungsenergie gespeichert wird. Wird das Honwerkzeug 14a in Richtung des Pfeiles 75 oszillierend hin und her bewegt, so bewegt sich die Trägheitsmasse 78 in Richtung des Pfeils 84 mit einer gewissen Phasenverschiebung zur Bewegung des Honwerkzeugs 14a hin und her.

Durch eine Wicklung 88 auf einem Magnetkern 86 in Form eines Blechpakets gemäß Fig. 10 wird hierdurch in Zusammenwirken mit zugeordneten Permanentmagneten 89 an der Trägheitsmasse 78 nach dem Prinzip eines Lineargenerators eine Spannung induziert. Diese kann zum Betreiben eines Sensors und zur drahtlosen Übertragung eines Signals genutzt werden, um die Absolutlage des Honwerkzeugs 14a oder die auf die Honleisten 70 ausgeübte Kraft zu erfassen und zu übertragen.

Die axiale Länge L_{M} der Permanentmagneten 89 ist deutlich kürzer als die axiale Länge des Magnetkerns L_{K} 86 der Wicklung 88. Somit ist eine wirkungsvolle Spannungserzeugung gewährleistet.

Um zu vermeiden, dass sich ein großes magnetisches Rastmoment infolge übereinstimmender Axiallängen (L_{M}) der Permanentmagnete 89 und des Magnetkerns (L_{K}) der Wicklung 88 ergibt, weicht die axiale Länge (L_{M}) der Permanentmagnete geringfügig von der axialen Länge des Magnetkerns 86 ab (L_{M} ≠ L_{K}).

Es versteht sich, dass an Stelle einer Wicklung 88 mit einem Magnetkern 86 auch mehrere Wicklungen 88 auf Magnetkernen 86 axial voneinander beabstandet auf dem Schaft 72 vorgesehen sein können.

Fig. 90 zeigt beispielhaft ein Magnetarray 90, das auf dem Schaft 72 alternativ zu der Wicklung 88 aufgenommen sein kann, um eine besonders effektive Energieerzeugung zu gewährleisten. Das Magnetarray 90 ist in einer ebenen Abwicklung der verschiedenen sich in Radialrichtung erstreckenden Wicklungen dargestellt. Mit einem derartigen Magnetarray 90 lässt sich eine wirkungsvolle Energieerzeugung sowohl aus der alternierenden Linearbewegung des Honwerkzeugs 14a als auch aus der Rotationsenergie der Trägheitsmasse 78 gewährleisten.

Fig. 12 zeigt beispielhaft, wie im Außenumfang des Schaftes 72 vorhandene Permanentmagnete 92 zur verlustarmen magnetischen Lagerung der Trägheitsmasse 78 am Schaft 72 genutzt werden können.

## Patentansprüche

1. Werkzeugspannsystem mit einem maschinell antreibbaren Werkzeughalter (12, 12a) zum Spannen eines Werkzeugs (14, 14a), mit einer Einrichtung (18, 22) zur Erzeugung von elektrischer Energie aus der Trägheitsenergie des Werkzeugspannsystems (10, 10a), **dadurch gekennzeichnet, dass** der Werkzeughalter (12a) oszillierend antreibbar ist, dass die Einrichtung (18,22) zur Erzeugung von elektrischer Energie aus der Trägheitsenergie des oszillierenden Werkzeugspannsystems (10) ausgebildet ist, und dass die Einrichtung (18,22) zur Erzeugung von elektrischer Energie eine auf einem Schaft (72) des Werkzeughalters (12a) zumindest axial beweglich gelagerte Trägheitsmasse (78) aufweist.

2. Werkzeugspannsystem nach Anspruch 1, **dadurch gekennzeichnet, dass** der Werkzeughalter (12a) in Längsrichtung hin- und her oszillierend antreibbar ist.

3. Werkzeugspannsystem nach Anspruch 1 oder 2, **dadurch gekennzeichnet, dass** der Werkzeughalter (12a) zur Aufnahme eines Honwerkzeuges (14a) ausgebildet ist.

4. Werkzeugspannsystem nach Anspruch 2 oder 3, **dadurch gekennzeichnet, dass** die Trägheitsmasse (78) zwischen zwei vorzugsweise federnden Anschlägen (80, 82) axial beweglich gelagert ist.

5. Werkzeugspannsystem nach einem der Ansprüche 2 bis 4, **dadurch gekennzeichnet, dass** am Schaft (72) und der Trägheitsmasse (78) zumindest eine mit einem Magnet (86) zusammenwirkende Wicklung (88) zur Erzeugung einer Induktionsspannung aus der in Längsrichtung hin- und her oszillierenden Bewegung und/oder der rotierenden Bewegung vorgesehen ist.

6. Werkzeugspannsystem nach Anspruch 5, **dadurch gekennzeichnet, dass** mindestens ein Magnet (89), vorzugsweise in Form eines Permanentmagneten, einerseits mit mindestens einer Wicklung (88) oder einem Magnetarray (90) andererseits zusammenwirkt, wobei vorzugsweise der mindestens eine Magnet (89) an der Trägheitsmasse (78) vorgesehen ist und die mindestens eine Wicklung (88) oder das Magnetarray (90) am Schaft (72).

7. Werkzeugspannsystem nach Anspruch 4, 5 oder 6, **dadurch gekennzeichnet, dass** eine in Axialrichtung zwischen den zwei Anschlägen (80,82) vorgegebene maximale Amplitude (x) in Axialrichtung größer ist als die axiale Länge (L_{M}) des mindestens einen Magneten (89).

8. Werkzeugspannsystem nach einem der Ansprüche 4 bis 7, **dadurch gekennzeichnet, dass** die mindestens eine Wicklung (88) einen Magnetkern (86) aufweist, dessen axiale Länge (L_{K}) von der axialen Länge des mindestens einen Magneten (89) abweicht (L_{M} ≠ L_{K}).

9. Werkzeugspannsystem nach einem der vorhergehenden Ansprüche, **dadurch gekennzeichnet, dass** im Werkzeughalter (12) eine Sendeeinrichtung (50) zur drahtlosen Übertragung eines Signals an eine stationäre Auswerteschaltung (54) vorgesehen ist.

10. Werkzeugspannsystem nach einem der Ansprüche 1 bis 2 oder 4 bis 9, **dadurch gekennzeichnet, dass** das Werkzeug (14) als Bohrwerkzeug, als Fräswerkzeug oder als Sägewerkzeug ausgebildet ist.

## Claims

1. A tool clamping system having a mechanically drivable tool holder (12, 12a) for clamping a tool (14, 14a), comprising a device (18, 22) for generating electrical energy from the inertial energy of the tool clamping system (10, 10a), **characterized in that** the tool holder (12a) can be driven in an oscillating manner,
**in that** the device (18, 22) is configured for the generation of electrical energy from the inertial energy of the oscillating tool clamping system (10) and
has an inertial mass (78) mounted at least axially movably on a shaft (72) of the tool holder (12a) for generating electrical energy.

2. The tool clamping system according to claim 1, **characterized in that** the tool holder (12a) can be driven back and forth in an oscillating manner in the longitudinal direction.

3. The tool clamping system according to claim 1 or 2, **characterized in that** the tool holder (12a) is designed to receive a honing tool (14a).

4. The tool clamping system according to claim 2 or 3, **characterized in that** the inertial mass (78) is mounted axially movably between two preferably resilient stops (80, 82).

5. The tool clamping system according to any of claims 2 to 4, **characterized in that**, on the shaft (72) and the inertial mass (78), there is provided at least one winding (88), which cooperates with a magnet (86), for generation of an induction voltage from the movement oscillating back and forth in the longitudinal direction and/or the rotary movement.

6. The tool camping system according to claim 5, **characterized in that** at least one magnet (89), preferably in the form of a permanent magnet, cooperates on the one hand with at least one winding (88) or a magnet array (90) on the other hand, wherein the at least one magnet (89) is preferably provided on the inertial mass (78) and the at least one winding (88) or the magnet array (90) is preferably provided on the shaft (72).

7. The tool clamping system according to any of claims 4, 5 or 6, **characterized in that** a maximum amplitude (x) in the axial direction defined in the axial direction between the two stops (80, 82) is greater than the axial length (L_{M}) of the at least one magnet (89).

8. The tool clamping system according to any of claims 4 to 7, **characterized in that** the at least one winding (88) has a magnet core (86), of which the axial length (L_{K}) deviates from the axial length of the at least one magnet (89) (L_{M} ≠ L_{K}).

9. The tool clamping system according to any of the preceding claims, **characterized in that** a transmitting device (50) for the wireless transfer of a signal to a stationary evaluation circuit (54) is provided in the tool holder (12).

10. The tool clamping system according to any of claims 1 to 2 or 4 to 9, **characterized in that** the tool (14) is designed as a drilling tool, as a milling tool, or as a sawing tool.

## Revendications

1. Système de serrage d'outil comprenant un porte-outil (12, 12a) pouvant être entraîné de façon mécanisée, destiné à serrer un outil (14, 14a), comprenant un dispositif (18, 22) destiné à générer de l'énergie électrique à partir de l'énergie d'inertie du système de serrage d'outil (10, 10a), **caractérisé en ce que** le porte-outil (12a) peut être entraîné en oscillation, **en ce que** le dispositif (18, 22) est configuré pour générer de l'énergie électrique à partir de l'énergie d'inertie du système de serrage d'outil (10) oscillant, et **en ce que** le dispositif (18, 22) destiné à générer de l'énergie électrique possède une masse d'inertie (78) montée sur une tige (72) du porte-outil (12a) au moins mobile dans le sens axial.

2. Système de serrage d'outil selon la revendication 1, **caractérisé en ce que** le porte-outil (12a) peut être entraîné en oscillation selon un mouvement de va-et-vient dans la direction longitudinale.

3. Système de serrage d'outil selon la revendication 1 ou 2, **caractérisé en ce que** le porte-outil (12a) est configuré pour accueillir un outil de rodage (14a).

4. Système de serrage d'outil selon la revendication 2 ou 3, **caractérisé en ce que** la masse d'inertie (78) est montée mobile dans le sens axial entre deux butées (80, 82) de préférence montées sur ressort.

5. Système de serrage d'outil selon l'une des revendications 2 à 4, **caractérisé en ce qu'**au moins un enroulement (88) collaborant avec un aimant (86) en vue de générer une tension d'induction à partir du mouvement oscillant de va-et-vient dans la direction longitudinale et/ou du mouvement de rotation se trouve au niveau de la tige (72) et de la masse d'inertie (78).

6. Système de serrage d'outil selon la revendication 5, **caractérisé en ce qu'**au moins un aimant (89), de préférence sous la forme d'un aimant permanent, coopère d'un côté avec au moins un enroulement (88) ou un réseau d'aimants (90) de l'autre côté, l'au moins un aimant (89) se trouvant de préférence au niveau de la masse d'inertie (78) et l'au moins un enroulement (88) ou le réseau d'aimants (90) au niveau de la tige (72).

7. Système de serrage d'outil selon la revendication 4, 5 ou 6, **caractérisé en ce qu'**une amplitude maximale (x) dans la direction axiale, prédéfinie dans une direction axiale entre les deux butées (80, 82), est plus grande que la longueur axiale (L_{M}) de l'au moins un aimant (89).

8. Système de serrage d'outil selon l'une des revendications 4 à 7, **caractérisé en ce que** l'au moins un enroulement (88) possède un noyau magnétique (86) dont la longueur axiale (L_{K}) est différente (L_{M} ≠ L_{K}) de la longueur axiale de l'au moins un aimant (89).

9. Système de serrage d'outil selon l'une des revendications précédentes, **caractérisé en ce qu'**un dispositif d'émission (50) destiné à la transmission sans fil d'un signal à un circuit d'interprétation fixe (54) se trouve dans le porte-outil (12).

10. Système de serrage d'outil selon l'une des revendications 1 et 2 ou 4 à 9, **caractérisé en ce que** l'outil (14) est réalisé sous la forme d'un outil de perçage, d'un outil de fraisage ou d'un outil de sciage.
